# EUROPEAN PATENT SPECIFICATION

(11) **EP 4 336 714 B1**
(45) Date of publication and mention of the grant of the patent: **18.11.2026**
(21) Application number: 23195917.2
(22) Date of filing: 07.09.2023
(51) Int. Cl.: H02K 5/22, H02K 5/10, H02K 15/12

(54) **ELECTRIC MACHINE THREE-PHASE STATOR**
DREIPHASENSTATOR EINER ELEKTRISCHEN MASCHINE
STATOR TRIPHASÉ DE MACHINE ÉLECTRIQUE

(30) Priority: 12.09.2022 IT 202200018492
(43) Date of publication of application: 13.03.2024
(73) Proprietor: FERRARI S.p.A., 41100 Modena (IT)
(72) Inventor: FERRARA, Davide, 41100 MODENA (IT); FAVERZANI, Paolo, 41100 MODENA (IT); POGGIO, Luca, 41100 MODENA (IT)
(74) Representative: Studio Torta S.p.A.

(56) References cited:
- DE-A1- 10 316 435
- FR-A1- 2 990 083
- US-A1- 2008 150 377
- US-A1- 2011 006 625

## Description

### CROSS-REFERENCE TO RELATED APPLICATIONS

This patent application claims priority from Italian patent application no. 102022000018492 filed on September 12, 2022.

### TECHNICAL FIELD

This invention relates to an electric machine three-phase stator.

This invention is advantageously applied to an automotive electric machine that is installed on a vehicle and can be used as a motor (absorbing electricity and generating mechanical torque) or as a generator (converting mechanical energy into electricity).

### PRIOR ART

A rotating, automotive electric machine comprises a shaft, which is mounted so it can rotate around a central rotation axis, a rotor, generally with permanent magnets fitted to the shaft to rotate together with the shaft, and a stator arranged around the rotor to enclose the rotor inside it.

The stator is generally provided with an outer electrical connector that has multiple connection elements connected to the inner busbars that collect the electrical current from the stator windings. In general, these busbars are encased or embedded in a resin that performs the function of insulating the electrical components of the stator in relation to external water and humidity, and also the function of transmitting and, thus, dissipating the heat produced by the busbars.

There is a need to perfect the known solutions just described, in particular to improve their water tightness, to simplify the methods for coupling the electrical connection elements to the busbars, and to reduce the dimensions of the stator and, thus, of the electric machine, in the axial direction.

DE10316435A1 corresponds to the preamble of claim 1 and discloses an electric motor with a connector having an injection moulded portion, which is coupled, via two gaskets, respectively to a housing and an end cover of the motor.

FR2990083A1, US2008150377A1 and US2011006625A1 show other solutions related to stators of electric motors.

### DESCRIPTION OF THE INVENTION

The purpose of this invention is to provide an electric machine three-phase stator that fulfils the needs mentioned above in a relatively simply and economical way.

According to this invention, an electric machine three-phase stator is provided, as defined in independent claim 1. This invention also relates to a method for manufacturing a three-phase stator, according to claim 6.

Preferred embodiments of this invention are then defined in the attached dependent claims.

### BRIEF DESCRIPTION OF THE DRAWINGS

This invention will now be described with reference to the attached drawings that illustrate a preferred nonlimiting embodiment thereof:
- Figure 1 is a perspective view of a preferred embodiment of the three-phase stator for an electric machine according to this invention;
- Figure 2 is a front view of the stator in Figure 1;
- Figure 3 is a cross section, according to the plane section III-III in Figure 2; and
- Figure 4 is similar to Figure 1 and shows the stator with some parts removed for clarity.

### PREFERRED EMBODIMENTS OF THE INVENTION

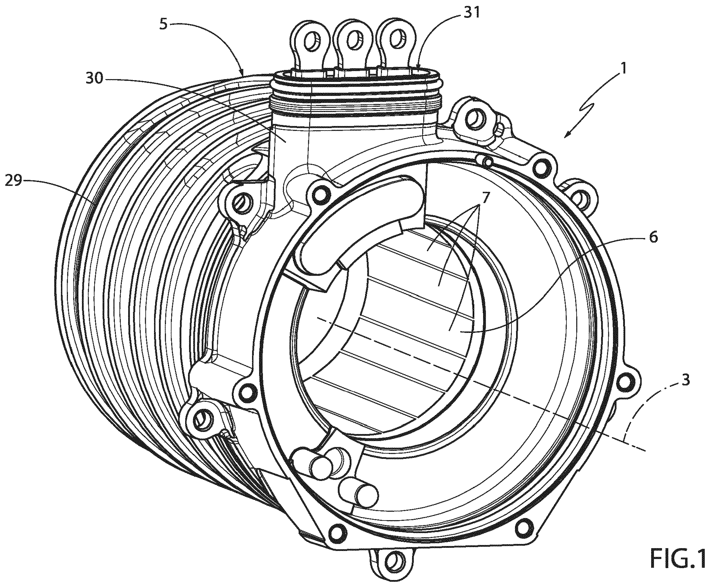

In Figure 1, the reference number 1 indicates, as a whole, a three-phase stator for a synchronous electric machine, in particular for automotive applications, for example a reversible one (i.e. an electric machine that can function both as an electric motor absorbing electricity and generating mechanical torque, and as an electrical generator, absorbing mechanical energy and generating electricity).

The stator 1 extends along an axis 3, which corresponds to the rotation axis of the rotor of the electric machine (not illustrated), and basically has a cylindrical, tubular shape so as to enclose this rotor inside.

The stator 1 comprises a casing 5 and a magnetic core 6 arranged in the casing 5 and comprising multiple magnetic poles 7. Around each magnetic pole 7, a corresponding coil that has two ends is arranged in a known way not illustrated in detail.

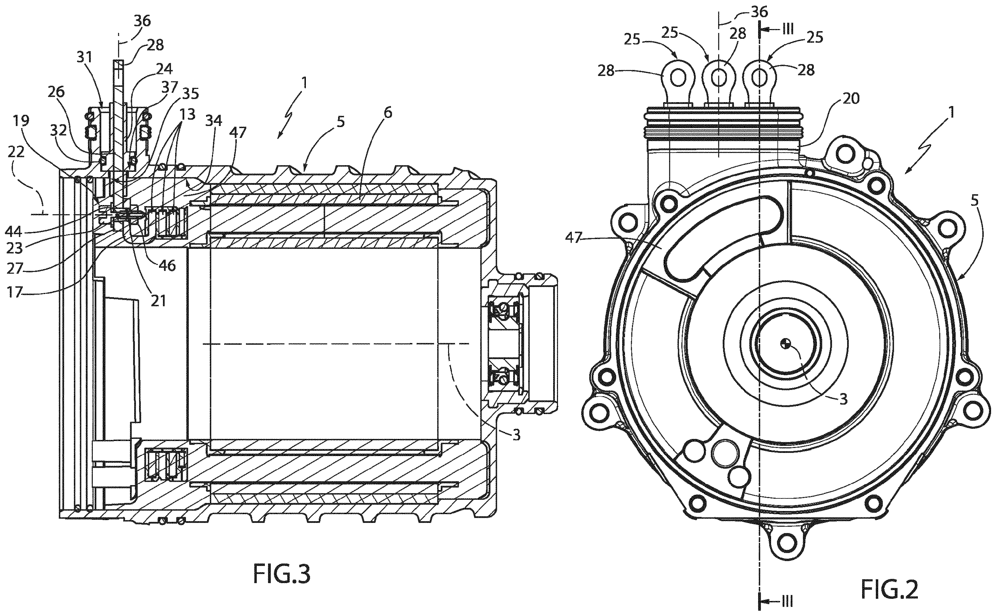

The ends of the coils are all arranged on one axial side of the core 6, i.e. on the left side with reference to Figure 3, so that they can be connected to each other to create a three-phase winding. In particular, the coils are connected, in a way not illustrated in detail, to three busbars 13, which have, in particular, a ring shape, whether open or closed, for example a circular shape. According to the preferred embodiment illustrated, each busbar 13 consists of a flat plate that is arranged perpendicularly to the axis 3 and, as mentioned above, has a circular shape (for example, like a smaller or bigger arc of a circle). The busbars 13 are coaxial to each other in relation to the axis 3, and are axially packed by interposing insulating supports, which are also coaxial in relation to the axis 3.

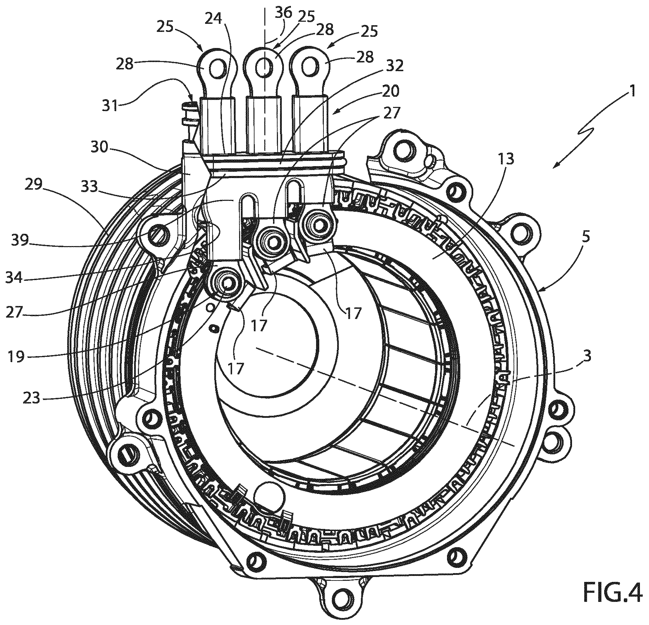

With reference to Figure 4, the busbars 13 carry corresponding contacts 17 that define the terminals of the above-mentioned three-phase winding and are connected, via corresponding fixing systems 19, to an electrical connector 20, which defines the connection of the stator 1 and, thus, of the electric machine outside. The contacts 17 are preferably defined by respective folded portions of the busbars 13. In other words, each contact 17 is a folded plate, which is of a single piece with the corresponding busbar 13.

As can be seen in Figure 2, each contact 17 defines an eyelet, i.e. it has a through hole 21, which is formed along an axis 22 parallel and spaced apart in relation to the axis 3 and is engaged by a corresponding screw 23, which is part of the above-mentioned fixing system 19, as will be explained better below.

With reference, again, to Figure 4, according to one aspect of this invention, the electrical connector 20 comprises an insulating support element 24 and three connection conductor elements 25 that are supported by the insulating support element 24. The connection conductor elements 25 are spaced apart from each other and, preferably, are not defined by wires, but are defined by basically stiff elements, i.e. less flexible than wires. For example, they are defined by flat sheets, arranged along the same plane that is orthogonal to the axis 3. Alternatively, the connection conductor elements 25 could have a different shape and/or structure, for example be in the shape of bars or pins. As an additional variant, the connection conductor elements 25 could be flexible, for example be defined by elements made of laminated copper, with their thickness in the order of tenths of millimetres, to be able to recover any tolerances along the axis 3.

The insulating support element 24 preferably consists of polymer material that, for example, is overmoulded on the connection conductor elements 25 (alternatively, the connection conductor elements 25 could be inserted in seats of the insulating support element 24). More specifically, each connection conductor element 25 comprises an intermediate portion 26 (Figure 3) embedded in the insulating support element 24 and two end portions, arranged opposite each other, indicated by the reference numbers 27 and 28 respectively, which are not covered by the intermediate portion 26 and are arranged one inside the other outside the casing 5.

The casing 5 preferably comprises a cylindrical portion 29, which is coaxial to the axis 3, and an outer portion defined, in particular, by an appendage 30 that projects radially from the cylindrical portion 29 and defines a seat or housing pocket 31, engaged, in a fluid-tight manner, by the insulating support element 24. This seal is ensured, in the specific example illustrated, by a gasket ring 32, which surrounds an intermediate portion 33 of the insulating support element 24 and is placed between the intermediate portion 33 and an annular wall that defines the appendage 30.

Alternatively, the seal may be ensured by a part of the same insulating support element 24 and/or by the same appendage 30, i.e. by interference coupling between the portion 33 of the insulating support element 24 and the annular wall that defines the appendage 30.

Alternatively, the seal may be ensured by a sealant arranged in the pocket 31.

With reference to Figure 3, the housing pocket 31 communicates with a volume or space 34 provided inside the casing 5 via a passage 35. The latter is formed along a direction 36, which is oriented orthogonally to the axis 3, in particular is spaced apart and, thus, tangential to the axis 3, and is parallel in relation to the three connection conductor elements 25.

The portion 33 of the insulating support element 24 preferably rests along the direction 36, against a surface 37 that defines the bottom of the housing pocket 31. In particular, the insulating support element 24 comprises, in addition, a portion 39 (Figure 4) that engages the passage 35 and projects starting from the portion 33 inside the space 34 in the casing 5.

The portions 28 of the connection conductor elements 25 define the outer terminals of the stator 1. The terminals 28 preferably project (parallel to the direction 36) beyond the appendage 30, i.e. outside the housing pocket 31. Alternatively, the terminals 28 could also be housed inside the housing pocket 31. In the specific case illustrated, the terminals 28 define respective eyelets, i.e. have respective through holes, for example with axes that are parallel to the axis 3, to be permanently connected, in use, to electrical wiring (not illustrated).

Similarly, with reference to Figure 3, in this particular solution, the end portions 27 of the connection conductor elements 25 define respective eyelets, i.e. have respective through holes 44, which are each coaxial with a corresponding hole 21 along the corresponding axis 22 and are engaged, respectively, by the screws 23. In other words, the screws 23 extend along the axes 22 and fix the end portions 27 of the connection conductor elements 25 to the respective contacts 17. For example, each fixing system 19 comprises a nut 46 that is screwed onto the threaded shank of the screw 23 and is tightened axially towards a face of the corresponding contact 17, on the side where the busbars 13 are, while the head of the screw 23 is arranged on the opposite axial side (where the end portions 27 are arranged) .

According to variants not illustrated, the screws 23, the nuts 46, and/or the holes 44 and/or 21 may be absent and replaced with a different fixing system, for example riveted pins, or welding (for example laser welding) to fix the connection conductor elements 25 to the busbars 13.

According to one aspect of this invention, the busbars 13, the contacts 17, the fixing systems 19, and the end portions 27 of the electrical connector 20 are embedded in a body 47 consisting of electrically insulating material, typically resin. The material of the body 47 is preferably chosen so as to be a heat conductor and, thus, transmit and dissipate heat from these electrical components. In particular, according to this type of solution, the body 47 defines a so-called encapsulation made of resin. More specifically, during the manufacture of the stator 1, the body 47 is formed using a technique called "potting", i.e. filling the space 34 available around the above-mentioned electrical components, using resin casting in fluid form (that will subsequently be subject to hardening via curing). This filling operation is carried out after the following operations:
- the electrical connector 20 is inserted along the direction 36 in the housing pocket 31 and through the passage 35; during this insertion operation, the insulating support element 24 is coupled in a fluid-tight manner to the casing 5 (in particular, to the appendage 30 described above by way of example); the wall that defines the appendage 30 also carries out a guiding function during insertion; this insertion ends when the portion 33 of the insulating support element 24 abuts against the bottom surface 37: at this point, the end portions 27 of the connection conductor elements 25 are arranged in positions aligned with the respective contacts 17, along the axes 22;
- after this positioning, the end portions 27 are fixed to the respective contacts 17 using screws 23 or using other techniques (for example, welding).

In particular, the connector 20 is stiff enough to keep the three connection conductor elements 25 in relatively stable positions during insertion and fixing.

During filling, it is clear how the passage 35 is plugged by the insulating support element 24 of the connector 20, thanks to the fluid tightness provided between the insulating support element 24 and the casing 5 (i.e. thanks to the gasket ring 32, in the specific example illustrated). Therefore, thanks to the connector 20, which is an element distinct from the incapsulating resin and performs the function of a plug, the resin does not flow out of the casing 5 through the passage 35 during filling and during the subsequent resin curing step.

From the above, the advantages of the stator solution envisaged according to this invention should be clear.

First of all, the radial arrangement of the passage 35 and of the connection conductor elements 25 makes it possible to significantly reduce the axial dimensions of the stator 1, compared to known solutions in which the electrical connection components for the outlet of the three phases are oriented parallel to the axis 3. Another result is that the space 34 to be filled with the material of the body 47 has relatively small dimensions. At the same time, the encapsulation defined by the body 47 has the end portions 27 of the electrical connector 20 and the fixing systems 19, so that this solution ensures better water tightness compared to the known solutions in which only the busbars 13 are encapsulated.

This complete encapsulation also enables improvement in the thermal dissipation of heat produced by the electrical components, given that the material that this body 47 consists of is chosen to be a thermal conductor. In turn, the greater dissipation could lead to accepting greater production of heat by the busbars 13 and, thus, could enable, in the design phase, a reduction in the thickness of these busbars 13 with a consequent, advantageous reduction of the weight of the stator 1.

In addition, the particular structure of the electrical connector 20 makes it possible to avoid wiring, or other complex electrical connection systems, and defines a rigid solution that remains in a stable and safe position during fixing to the contacts 17, and during the filling of the space 34 with the resin to form the body 47. In particular, the structure of the electrical connector 20 and the complete encapsulation in the resin defining the body 47 make it possible to stiffen the solution proposed compared to the known solutions, for example those where there is connection wiring between the busbars and the outer terminals, with a consequent improvement in the resistance of the stator 1 to mechanical stresses during use.

In addition, in the specific solution proposed in the attached drawings, the fixing to the contacts 17 is relatively simple: in fact, the screws 23 are easily screwed, thanks to the fact that these screws 23 are parallel to the axis 3 and have their head axially facing outside.

From the above, it is also clear how they modifications may be made to the stator 1, as described above, or variations produced thereof, without, for this reason, departing from the protective scope as defined by the attached claims.

In particular, the shape and size of the various components illustrated could be different to those illustrated, by way of example.

## Claims

1. An electric machine three-phase stator (1), extending along an axis (3) and comprising:
- a casing (5) having an inner space (34);
- a magnetic core (6) arranged in said casing (5) and comprising multiple magnetic poles (7);
- coils, each arranged around a corresponding magnetic pole (7) and having two ends, the ends of the coils being all arranged on one axial side of said core (6) and being connected to each other to create a three-phase winding;
- three busbars (13), which are connected to the coils and carry respective contacts (17), within and at an axial end of said casing (5), said contacts (17) defining terminals of said three-phase winding;
- fixing means (19);
- an encapsulation material (47), in which said busbars (13) are embedded;
- an electrical connector (20), which is distinct from said encapsulation material (47), is coupled to said casing (5) in a fluid-tight manner and defines a connection of the stator (1) outside;
wherein said electrical connector (20) comprises:
a) three connection conductor elements (25), which have respective outer ends defining outer terminals (28) and respective inner ends (27) inside said casing (5); said inner ends (27) being respectively fixed to said contacts (17) by means of said fixing means (19) to electrically connect said contacts (17) to said outer terminals (28) via said fixing means (19);
b) an insulating support element (24), which supports said connection conductor elements (25);
wherein said contacts (17), said fixing means (19) and said inner ends (27) are embedded in said encapsulation material (47) ;
**characterized in that**:
- said casing (5) comprises an outer portion (30) defining a housing pocket (31), which communicates with said inner space (34) by means of a passage (35) formed in said casing (5) along a direction (36) oriented orthogonally to said axis (3),
- said connection conductor elements (25) extend through said passage (35), and
- said insulating support element (24) engages said housing pocket (31) in a fluid-tight manner.

2. The three-phase stator according to claim 1, wherein said connection conductor elements (25) are parallel to said direction (36).

3. The stator according to claim 1 or 2, wherein said direction (36) is spaced apart from the axis (3) of the three-phase stator.

4. The three-phase stator according to any one of the preceding claims, wherein said connection conductor elements (25) are arranged along a plane that is orthogonal to the axis (3) of the three-phase stator.

5. The stator according to claim 1, wherein said insulating support element (24) is coupled to said outer portion (30) through a gasket ring (32) or through a sealant.

6. A method to manufacture a three-phase stator according to any one of the preceding claims, the method comprising the following steps:
- inserting said electrical connector (20) along said direction (36), which is oriented orthogonally to said axis (3), into said housing pocket (31); the inserting step comprising the operations of
a) coupling said electrical connector (20) to said casing (5) in a fluid-tight manner so as to close said housing pocket (31), and
b) aligning said inner ends (27) with said contacts (17), respectively, along respective axes (22);
- fixing said inner ends (27) to said contacts by said fixing means (19) after the inserting step;
- after the fixing step, filling said inner space (34) in said casing (5) with a resin so as to embed said busbars (13), said contacts (17), said fixing means (19) and said inner ends (27); and
- curing to harden said resin, after the filling step.

7. The method according to claim 6, wherein the insertion of said electrical connector (20) comprises the operation of engaging said insulating support element (24) in said housing pocket (31), by coupling said insulating support element (24) to said outer portion (30) through a gasket ring.

8. The method according to any one of the claims from 6 to 7, wherein the filling step is carried out through potting.

## Patentansprüche

1. Drehstromstator (1) einer elektrischen Maschine, der sich entlang einer Achse (3) erstreckt und Folgendes umfasst:
- ein Gehäuse (5) mit einem Innenraum (34);
- einen in dem Gehäuse (5) angeordneten Magnetkern (6), der mehrere Magnetpole (7) umfasst;
- Spulen, die jeweils um einen entsprechenden Magnetpol (7) angeordnet sind und zwei Enden aufweisen, wobei die Enden der Spulen alle auf einer axialen Seite des Kerns (6) angeordnet und miteinander verbunden sind, um eine Dreiphasenwicklung zu bilden;
- drei Sammelschienen (13), die mit den Spulen verbunden sind und jeweilige Kontakte (17) innerhalb und an einem axialen Ende des Gehäuses (5) tragen, wobei die Kontakte (17) Anschlüsse der Dreiphasenwicklung bilden;
- Befestigungsmittel (19);
- ein Verkapselungsmaterial (47), in das die Sammelschienen (13) eingebettet sind;
- ein elektrischer Steckverbinder (20), der sich von dem Verkapselungsmaterial (47) unterscheidet, fluiddicht an das Gehäuse (5) gekoppelt ist und eine Verbindung des Stators (1) außen definiert;
wobei der elektrische Steckverbinder (20) umfasst:
a) drei Verbindungsleiterelemente (25), die jeweilige äußere Enden, die äußere Anschlüsse (28) definieren, und jeweilige innere Enden (27) innerhalb des Gehäuses (5) aufweisen; wobei die inneren Enden (27) jeweils mittels der Befestigungsmittel (19) an den Kontakten (17) befestigt sind, um die Kontakte (17) über die Befestigungsmittel (19) elektrisch mit den äußeren Anschlüssen (28) zu verbinden;
b) ein isolierendes Stützelement (24), das die Verbindungsleiterelemente (25) stützt;
wobei die Kontakte (17), die Befestigungsmittel (19) und die inneren Enden (27) in das Verkapselungsmaterial (47) eingebettet sind;
**dadurch gekennzeichnet, dass**:
- das Gehäuse (5) einen Außenabschnitt (30) umfasst, der eine Aufnahmetasche (31) definiert, die mit dem Innenraum (34) über einen Durchgang (35) kommuniziert, der in dem Gehäuse (5) entlang einer Richtung (36) ausgebildet ist, die orthogonal zur Achse (3) ausgerichtet ist,
- sich die Verbindungsleiterelemente (25) durch den Durchgang (35) erstrecken, und
- das isolierende Stützelement (24) fluiddicht in die Aufnahmetasche (31) eingreift.

2. Drehstromstator nach Anspruch 1, wobei die Verbindungsleiterelemente (25) parallel zu der Richtung (36) verlaufen.

3. Stator nach Anspruch 1 oder 2, wobei die Richtung (36) von der Achse (3) des Drehstromstators beabstandet ist.

4. Drehstromstator nach einem der vorhergehenden Ansprüche, wobei die Verbindungsleiterelemente (25) entlang einer Ebene angeordnet sind, die orthogonal zur Achse (3) des Drehstromstators verläuft.

5. Stator nach Anspruch 1, wobei das isolierende Stützelement (24) über einen Dichtungsring (32) oder über ein Dichtungsmittel an den Außenabschnitt (30) gekoppelt ist.

6. Verfahren zur Herstellung eines Drehstromstators nach einem der vorhergehenden Ansprüche, wobei das Verfahren die folgenden Schritte umfasst:
- Einführen des elektrischen Steckverbinders (20) entlang der Richtung (36), die orthogonal zur Achse (3) ausgerichtet ist, in die Aufnahmetasche (31); wobei der Einführungsschritt die folgenden Vorgänge umfasst:
a) Koppeln des elektrischen Steckverbinders (20) fluiddicht mit dem Gehäuse (5), um die Aufnahmetasche (31) zu verschließen, und
b) Ausrichten der inneren Enden (27) jeweils mit den Kontakten (17) entlang jeweiliger Achsen (22);
- Befestigen der inneren Enden (27) an den Kontakten durch die Befestigungsmittel (19) nach dem Einführungsschritt;
- nach dem Befestigungsschritt, Füllen des Innenraums (34) in dem Gehäuse (5) mit einem Harz, um die Sammelschienen (13), die Kontakte (17), die Befestigungsmittel (19) und die inneren Enden (27) einzubetten; und
- Aushärten, um das Harz nach dem Füllschritt auszuhärten.

7. Verfahren nach Anspruch 6, wobei das Einführen des elektrischen Steckverbinders (20) den Vorgang des Eingreifens des isolierenden Stützelements (24) in die Aufnahmetasche (31) durch Koppeln des isolierenden Stützelements (24) mit dem Außenabschnitt (30) durch einen Dichtungsring umfasst.

8. Verfahren nach einem der Ansprüche 6 bis 7, wobei der Füllschritt durch Vergießen durchgeführt wird.

## Revendications

1. Stator (1) triphasé de machine électrique, s'étendant le long d'un axe (3) et comprenant :
- un carter (5) comportant un espace interne (34) ;
- un noyau (6) magnétique agencé dans ledit carter (5) et comprenant de multiples pôles magnétiques (7) ;
- des bobines, agencées chacune autour d'un pôle magnétique (7) correspondant et comportant deux extrémités, les extrémités des bobines étant toutes agencées sur un côté axial dudit noyau (6) et étant connectées les unes aux autres pour créer un enroulement triphasé ;
- trois barres omnibus (13), qui sont connectées aux bobines et portent des contacts (17) respectifs, au sein et à une extrémité axiale dudit carter (5), lesdits contacts (17) définissant des bornes dudit enroulement triphasé ;
- des moyens de fixation (19) ;
- un matériau d'encapsulation (47), dans lequel lesdites barres omnibus (13) sont noyées ;
- un connecteur électrique (20), qui est distinct dudit matériau d'encapsulation (47), est couplé audit carter (5) d'une manière étanche aux fluides et définit une connexion du stator (1) avec l'extérieur ;
dans lequel ledit connecteur électrique (20) comprend :
a) trois éléments conducteurs de connexion (25), qui comportent des extrémités externes respectives définissant des bornes externes (28) et des extrémités internes (27) respectives à l'intérieur dudit carter (5) ; lesdites extrémités internes (27) étant respectivement fixées auxdits contacts (17) au moyen desdits moyens de fixation (19) pour connecter électriquement lesdits contacts (17) auxdites bornes externes (28) via lesdits moyens de fixation (19) ;
b) un élément de support isolant (24), qui porte lesdits éléments conducteurs de connexion (25) ;
dans lequel lesdits contacts (17), lesdits moyens de fixation (19) et lesdites extrémités internes (27) sont noyés dans ledit matériau d'encapsulation (47) ;
**caractérisé en ce que** :
- ledit carter (5) comprend une partie externe (30) définissant une poche de logement (31), qui communique avec ledit espace interne (34) au moyen d'un passage (35) formé dans ledit carter (5) le long d'une direction (36) orientée de manière orthogonale audit axe (3),
- lesdits éléments conducteurs de connexion (25) s'étendent à travers ledit passage (35), et
- ledit élément de support isolant (24) se met en prise avec ladite poche de logement (31) d'une manière étanche aux fluides.

2. Stator triphasé selon la revendication 1, dans lequel lesdits éléments conducteurs de connexion (25) sont parallèles à ladite direction (36).

3. Stator selon la revendication 1 ou 2, dans lequel ladite direction (36) est espacée de l'axe (3) du stator triphasé.

4. Stator triphasé selon l'une quelconque des revendications précédentes, dans lequel lesdits éléments conducteurs de connexion (25) sont agencés le long d'un plan qui est orthogonal à l'axe (3) du stator triphasé.

5. Stator selon la revendication 1, dans lequel ledit élément de support isolant (24) est couplé à ladite partie externe (30) par l'intermédiaire d'un joint circulaire (32) ou par l'intermédiaire d'un produit d'étanchéité.

6. Procédé pour fabriquer un stator triphasé selon l'une quelconque des revendications précédentes, le procédé comprenant les étapes suivantes :
- l'insertion dudit connecteur électrique (20) le long de ladite direction (36), qui est orientée de manière orthogonale audit axe (3), jusque dans ladite poche de logement (31) ; l'étape d'insertion comprenant les opérations suivantes
a) le couplage dudit connecteur électrique (20) audit carter (5) d'une manière étanche aux fluides de façon à fermer ladite poche de logement (31), et
b) l'alignement desdites extrémités internes (27) avec lesdits contacts (17), respectivement, le long d'axes (22) respectifs ;
- la fixation desdites extrémités internes (27) auxdits contacts par lesdits moyens de fixation (19) après l'étape d'insertion ;
- après l'étape de fixation, le remplissage dudit espace interne (34) dans ledit carter (5) avec une résine de façon à noyer lesdites barres omnibus (13), lesdits contacts (17), lesdits moyens de fixation (19) et lesdites extrémités internes (27) ; et
- une polymérisation pour durcir ladite résine, après l'étape de remplissage.

7. Procédé selon la revendication 6, dans lequel l'insertion dudit connecteur électrique (20) comprend l'opération de mise en prise dudit élément de support isolant (24) dans ladite poche de logement (31), par le couplage dudit élément de support isolant (24) à ladite partie externe (30) par l'intermédiaire d'un joint circulaire.

8. Procédé selon l'une quelconque des revendications 6 à 7, dans lequel l'étape de remplissage est effectuée par enrobage.
